# EUROPEAN PATENT APPLICATION

(11) **EP 3 288 219 A1**
(43) Date of publication of application: **28.02.2018**
(21) Application number: 16185178.7
(22) Date of filing: 22.08.2016
(51) Int. Cl.: H04L 12/28, H04W 48/18, H04W 88/06, H04W 88/08

(54) **RADIO ACCESS NETWORK NODE ARRANGEMENT, RADIO COMMUNICATION DEVICE, AND METHODS OF PROCESSING A PLURALITY OF DATA UNITS**

(71) Applicant: NTT DoCoMo, Inc., Tokyo 100-6150 (JP)
(72) Inventor: MUTIKAINEN, Jari, 81541 München (DE); KIESS, Wolfgang, 81369 München (DE)
(74) Representative: Viering, Jentschura & Partner mbB Patent- und Rechtsanwälte

(57) **Abstract**

In various embodiments, a radio access network node arrangement is provided. The radio access network node arrangement may include a first radio access network node configured to provide a radio connection in accordance with a first radio type, a second radio access network node configured to provide a radio connection in accordance with a second radio type, and a receiver configured to receive a plurality of data units from a core network. Each data unit includes a selection indicator. The radio access network node arrangement may further include a selection circuit configured to select, using the selection indicator and a stored set of one or more selection rules, for each data unit of the plurality of data units, one or more of the radio types to transmit the data unit. Each selection rule includes a rule to select one or more radio types at least based on a selection indicator.

## Description

Various embodiments relate to a radio access network node arrangement, a radio communication device, and methods of processing a plurality of data units.

Standardization for 5G (Fifth Generation) networks is currently ongoing in 3GPP (Third Generation Partnership Project). One agreement done in 3GPP RAN2 (Radio Access Network 2) group is that a so-called Dual Connectivity as specified in TS 36.300, Rel-12 (e.g. Version 12.10.0) will be used as a basis how 5G New Radio (5G NR) and LTE evolution (eLTE) radio can be interconnected in a manner that only a single control plane interface is used from the core network towards the radio access network (RAN).

One option in Dual Connectivity is where so called split bearers (TS 36.300 (e.g. Version 12.10.0)) can utilize radio resources from 5G NR and eLTE simultaneously for the UE (User Equipment), so that the core network sees only one user plane communication connection towards the RAN (the bearer from the core network is spilt into a plurality of radio bearers). In this option, the 5G NR radio and the eLTE radio are served by two distinct radio base stations (eNodeBs, eNBs), called Master eNB (MeNB) and Secondary eNB (SeNB). The role of the MeNB may be either performed by the eLTE or 5G NR technology, depending on the network deployment and operator choice.

Since with split bearers the core network only sees a single user plane communication connection to the RAN, i.e. there is only a single user plane bearer from the core network perspective, the core network is able to indicate a used communication service to the RAN only on the bearer level. This indication is usually carried at the time of bearer setup in a QCI parameter (QoS Class Identifier) as specified in TS 23.401. QCI values are specified in TS 23.203. This is a sufficient mechanism to distinguish the used communication services in a case when each communication service is carried in a separate core network bearer that uses a distinct QCI value. This applies e.g. to Voice over Long Term Evolution (VoLTE) (conventionally QCI values 1, 2, and 5 are used) and best effort Internet communication services (either QCI value 8 or 9 is conventionally used).

Another study item that is ongoing for 5G standardization in 3GPP is the so-called Internet Protocol (IP) flow based Quality of Service (QoS) framework that is described in TR 23.799, section 6.2.2. This introduces a Flow Priority Indicator (FPI), which is conventionally used to indicate the priority level of the IP flow within one single Evolved Packet Core (EPC) bearer. A concept in this framework is the ability to assign a different priority level for each communication service carried by the IP flow in the EPC bearer.

In a conventional RAT selection for split bearers, the user plane connection from the core network to the RAN is always with the MeNB. When the MeNB receives the downlink data packet from the core network (in an ECP configuration, this data packet is usually received from the serving gateway, SGW), it needs to select the radio access technology (RAT) that is used towards the UE to carry the downlink data packet. To be more precise, in downlink communication direction, the RAT selection is performed in Packet Data Convergence Protocol (PDCP) layer in MeNB for each PCDP Packet Data Unit (PDU), based on the rules the PDCP layer receives from the upper layer, i.e. from the RRC layer in the MeNB. In uplink communication direction, the RAT selection is performed in the UE, based on the rules the UE receives from MeNB via RRC signaling. The PDCP operation is described in TS 36.323.

The current RAT selection rules are based on the use of the two variables *ul-DataSplitThreshold* and *ul-DataSplitDRB-ViaSCG,* as described in section 4.2.2 in TS 36.323. With these variables, it is possible to force the transmission of the PDUs either via a radio bearer via the SeNB, a radio bearer via the MeNB, or if the data in the buffer available for transmission exceeds the threshold, then select either of the radio for each PDU.

Furthermore, a QCI (QoS Class Indicator) parameter is conventionally carried in a bearer setup request from the core network to the RAN at the time of the bearer setup as specified in TS 23.401, where QCI values are specified in TS 23.203. This is a sufficient mechanism to distinguish the used communication services in case each communication service is carried in separate core network bearers that use distinct QCI value. This applies e.g. to VoLTE (QCI values 1, 2, and 5 are used) and best effort Internet communication services (either QCI value 8 or 9 is used)

Document S2-163698 submitted to SA2 meeting 116 proposes that the core network should be able to 'direct' the UE to a different RAT, when the existing RAT is not sufficient to meet the QoS requirements of the UE. No details how this could be implemented are described. Furthermore, the proposal assumes that the UE is connected via a single RAT at a time.

S2-163572 is a similar proposal as the one above, also made at SA2 meeting 116. It proposes that the core network should be able to 'direct' the UE to a different RAT based on the selected network slice which in turn is selected based on the service QoS requirements. In similar manner the proposal assumes the UE is connected via a single RAT at a time.

A possible future IP flow based QoS framework is described in TR 23.799 section 6.2.2. This introduces a Flow Priority Indicator (FPI) to indicate the priority level of the IP flow within one single EPC bearer. The key concept in this framework is the ability to assign a different priority level for each communication service carried by the IP flow in the EPC bearer. The RAN should then take the FPI into account in downlink scheduling prioritization. For operation in the uplink communication direction, a so called Reflective QoS is defined. Here, the RAN indicates the FPI to the UE via the radio level headers in user plane (e.g. at PCDP layer) and the UE then creates a binding table of the downlink IP flow (as identified by the 5-tuple of source / destination IP, source / destination ports as well as protocol identifier) and the corresponding FPI. When the UE is about to send uplink data, the UE searches the binding table for the IP flow of the uplink data packet, and uses the corresponding FPI for prioritization. As a result the priority of the IP flow in uplink communication direction 'reflects' the priority of the same IP flow in the downlink communication direction.

In various embodiments, a radio access network node arrangement is provided. The radio access network node arrangement may include a first radio access network node configured to provide a radio connection in accordance with a first radio type, a second radio access network node configured to provide a radio connection in accordance with a second radio type, and a receiver configured to receive a plurality of data units from a core network. Each data unit includes a selection indicator. The radio access network node arrangement may further include a selection circuit configured to select, using the selection indicator and a stored set of one or more selection rules, for each data unit of the plurality of data units, one or more of the radio types to transmit the data unit. Each selection rule includes a rule to select one or more radio types at least based on a selection indicator.

A radio access network node in this context may also be referred to as a base station and may be implemented, depending on the respective radio communication technology, as a NodeB, eNodeB, 5G New Radio base station, and the like.

It is to be noted that the first radio access network node and the second radio access network node may be implemented in one common device (e.g. in one common base station) or in separate devices.

Furthermore, the circuits may be implemented in one single circuit or processor or in a plurality of individual circuits, depending on the implementation requirements.

A respective radio type may e.g. include a radio access technology (RAT), e.g. a RAT depending on the respective radio communication technology, a UMTS-RAT, an LTE-RAT, an LTE-A-RAT, an eLTE-RAT, a 5G NR RAT, and the like. A radio type defines the physical layer signaling and data transmission via the air interface, for example. A respective radio type may e.g. further include a specific macro base station or femto base station, and similar configurations (in other words, different radio types in the context of this application may include a scenario in which the two or more RATs are of the same radio access technology, but with different configurations e.g. in terms of coverage or frequency, leading to different propagation characteristics/coverage areas. Thus, the first radio type and the second radio type may be of the same radio access technology (RAT), but then different configurations, or of different RATs.

A data unit may include or be a data packet including a plurality of bits (data bits and control bits), e.g. a Transport Control Protocol (TCP) data packet, a Universal Data Protocol (UDP), an Internet Protocol (IP) data packet, or a MQ Telemetry Transport (MQTT) data packet or any other suitable data packet in accordance with any other desired communication protocol, which may e.g. be analyzed (e.g. unpacked) by a base station so that the selection indicator may be determined by the base station in order to allow the selection of the radio type in accordance with the pre-stored set of rules.

Illustratively, in various embodiments, a radio type, e.g. a radio access technology, is selected, e.g. by a base station, e.g. in a Dual Connectivity Mode, based on a selection indicator that is assigned to and included in a respective data packet that is transmitted e.g. in downlink direction, coming from the core network. This allows e.g. a communication flow specific selection of the radio type used for the transmission of the respective data packets over the air interface from a plurality of two, three, four, or even more possibly provided different radio types, e.g. different radio access technologies. Thus, an optimized selection of the radio type for specific transmission requirements of a data packet, e.g. for a plurality of data packets of a common communication flow such as e.g. a common IP flow, may be provided. An IP flow may be uniquely identified by a 5-tuple of source IP address / destination IP address, source port / destination port as well as protocol identifier).

Various embodiments may take into account characteristics of the communication service(s) when selecting the most suitable radio type, e.g. radio access technology in a scenario where a plurality of communication services are carried in a single core network bearer.

By way of example, consider the case that "normal" Internet traffic shares a core network bearer with traffic that has tight latency requirements. Various embodiments may allow to steer the communication service with the low latency requirements to the radio access technology that achieves lower latency, thus improving a good user experience.

The radio access network node arrangement may further include a transmitter configured to transmit the data unit in accordance with the selected radio type. The transmitter may be configured to transmit the data unit in downlink communication direction (i.e. a transmission direction from the base station to the communication terminal device).

The radio access network node arrangement may further include a memory configured to store the set of one or more selection rules. In other words, the radio access network node arrangement may include a non-volatile memory, in which the set of one or more selection rules may be pre-stored.

A possible rule may read as follows:
"*When submitting PDCP PDUs to lower layers upon request from lower layers, the transmitting PDCP entity shall:*
   *if ul-DataSplitThreshold is configured and the data available for transmission is larger than or equal to ul-DataSplitThreshold:*
      *submit the PDCP PDUs to either the associated AM RLC entity configured for SCG or the associated AM RLC entity configured for MCG; else:*
         *if ul-DataSplitDRB-ViaSCG is set to TRUE by upper layers [3]:*
            *submit the PDCP PDUs* to *the associated AM RLC entity configured for SCG; else:*
               *submit the PDCP PDUs* to *the associated AM RLC entity configured for MCG."*

In various embodiments, the RAT selection rule may include or consist of the parameters ***ul-DataSplitThreshold*** and ***ul-DataSplitDRB-ViaSCG*** for a particular IP flow.

It is to be noted that any desired selection rule may be formulated and implemented in the set of selection rules.

Moreover, the radio access network node arrangement may further include a baseband modem (in the following also referred to as baseband unit) configured to provide modulation and demodulation of signals. The baseband modem may include the selection circuit. Illustratively, the method of selection of the respective radio type based on the (pre-stored) selection rules may be implemented in the baseband modem of the radio access network node arrangement.

In various embodiments, the receiver is further configured to receive at least a portion of the set of rules. The memory may further be configured to store the same in the memory. In other words, the set of rules or a portion of the set of rules may be transmitted from the core network to the radio access network node arrangement.

The transmitter may further be configured to transmit at least a portion of the set of rules to a radio communication device.

The transmitter may further be configured to convert the rules from the received format to a format that can be carried in access stratum signaling and to transmit the format converted rules by means of access stratum signaling.

As an alternative, the transmitter may be configured to transparently pass the rules and transmit the rules which are unchanged in their format by means of non-access stratum signaling.

The first radio access network node may be configured to provide a radio communication in accordance with Long Term Evolution (LTE), e.g. LTE Advanced (LTE-A), e.g. eLTE.

The second radio access network node may be configured to provide a radio communication in accordance with 5G New Radio in general any radio access technology in accordance with 5G.

The set of rules includes at least one element of a group of elements consisting of:
- one or more allowed radio access types;
- one or more preferred radio access types; and
- one or more refused radio access types.

In various embodiments, the radio access network node arrangement may be configured to provide a (one common, in other words one single) logical connection to the core network. The logical connection may include a plurality of radio connections, a first radio connection in accordance with the first radio type, and a second radio connection in accordance with the second radio type, to a radio communication terminal device.

Data units (e.g. data packets) of a same communication service may include the same selection indicator (e.g. a selection indicator of the same value). Thus, the same rule may be applied to the data units of a same communication service, which may ensure the selection of the same radio type (e.g. the same radio access technology) for all data units of the same communication service.

In the context of this application, a communication service is to be understood as any service that is provided e.g. by a communication server. By way of example, a communication service may include an application program. A communication service may include or be one or more communication flows such as one or more IP flows (e.g. identified by a pair of IP addresses), which may also be referred to as a (IP) packet flow, wherein each communication flow includes one or more specific requirements for the appropriate provision of the communication flow. An illustrative example of a communication service may be seen in an Internet browser session. It is to be noted that an application program may include a plurality of communication flows. A communication service in the context of this application can furthermore be understood as any service that produces an communication flow, e.g. an IP flow, to or from a user equipment. The packets in this communication flow, e.g. IP flow, have similar performance requirements and are consumed or produced by an application on the user equipment. Note that a single user equipment may very well run multiple such communication services with different requirements in parallel, and that furthermore a single communication service might produce multiple different communication flows, e.g. IP flows, with different requirements, like for example a voice over IP call with at least a signaling flow and another flow for the transmission of data packets carrying digitized voice information.

A communication service may be selected from a group of communication services consisting of:
- voice communication service;
- video communication service;
- text communication service; and
- multimedia communication service; and
- machine communication service.

In various embodiments, the data units of a common communication flow comprise the same selection indicator. The communication flow may be an end-to-end communication flow, e.g. an Internet Protocol (IP) communication flow. In this case, the data unit of a common Internet Protocol communication flow may be an Internet Protocol (IP) data packet.

The selection circuit may be implemented in a Packet Data Convergence Protocol (PDCP) circuit.

The first radio access network node and the second radio access network node may be configured to provide one or more individual radio bearers. In other words, the radio access network node arrangement may be configured as a Dual Connectivity radio access network node arrangement, e.g. in accordance with TS 36.300 (e.g. TS 36.300 Version 12.10.0), Rel-12. Thus, the first radio access network node and the second radio access network node may be configured to provide one or more split radio bearers.

In various embodiments, a radio communication device is provided. The radio communication device may include a first transceiver configured in accordance with a first radio type, and a second transceiver configured in accordance with a second radio type. The first transceiver and/or the second transceiver may be configured to receive one or more first data units, wherein each first data unit comprises a selection indicator. The radio communication device may further include a data unit generator configured to generate one or more second data units, wherein the one or more first data units and the one or more second data units belong to a same communication flow, and a selection circuit configured to select, using the selection indicator and a stored set of one or more selection rules, for each second data unit of the one or more second data units, the radio type to transmit the one or more second data units. Each selection rule includes a rule to select one or more radio types at least based on a selection indicator.

The first transceiver and/or the second transceiver may be configured to transmit the one or more second data unit in uplink communication direction (i.e. a transmission direction from the communication terminal device to the base station).

The radio communication device may further include a memory configured to store the set of one or more selection rules.

The radio communication device may further include a baseband modem configured to provide modulation and demodulation of signals. The baseband modem may include the selection circuit.

The first transceiver and/or the second transceiver may further be configured to receive at least a portion of the set of rules. The memory may further be configured to store the same in the memory.

The first transceiver may be configured to provide a radio communication in accordance with Long Term Evolution (LTE), e.g. LTE Advanced (LTE-A), e.g. eLTE.

The second transceiver may be configured to provide a radio communication in accordance with 5G New Radio, in general any radio access technology in accordance with 5G, or 3GPP Rel. 15 and beyond, or IMT-2020 new radio.

The set of rules includes at least one element of a group of elements consisting of:
- one or more allowed radio access types;
- one or more preferred radio access types; and
- one or more refused radio access types.

Second data units of a same communication service may include the same selection indicator.

The communication flow may be an end-to-end communication flow. The end-to-end communication flow may be an Internet Protocol communication flow. The one or more first data units and/or the one or more second data units may be an Internet Protocol data packet.

The selection circuit may be implemented in a PDCP circuit.

A communication service may be selected from a group of communication services consisting of:
- voice communication service;
- video communication service;
- text communication service; and
- multimedia communication service; and
- machine communication service.

The radio communication device may be configured as a radio communication terminal device such as e.g. a User Equipment (UE) or any other terminal device, depending on the respectively provided communication technology (e.g. a Nano Equipment (NE) in accordance with 5G).

In various embodiments, a method of processing a plurality of data units is provided. The method may include receiving a plurality of data units from a core network. Each data unit includes a selection indicator. The method may further include selecting, using the selection indicator and a stored set of one or more selection rules, for each data unit of the plurality of data units, one or more radio types from a plurality of radio types to transmit the data unit. Each selection rule includes a rule to select one or more radio types at least based on a selection indicator.

The method may further include transmitting the data unit in accordance with the selected radio type. The transmitting includes transmitting the data unit in downlink communication direction.

The method may further include storing the set of one or more selection rules.

The selecting may be performed in a baseband modem.

The method may further include receiving at least a portion of the set of rules, and storing the same.

The method may further include transmitting at least a portion of the set of rules to a radio communication device.

A first radio type of the plurality of radio types may include a radio communication in accordance with Long Term Evolution (LTE), e.g. LTE Advanced (LTE-A), e.g. eLTE.

A second radio type of the plurality of radio types may include a radio communication in accordance with 5G New Radio, in general any radio access technology in accordance with 5G, or 3GPP Rel. 15 and beyond, or IMT-2020 new radio..

The set of rules includes at least one element of a group of elements consisting of:
- one or more allowed radio access types;
- one or more preferred radio access types; and
- one or more refused radio access types.

The method may further include providing a logical connection to the core network, wherein the logical connection comprises a plurality of radio connections, a first radio connection in accordance with a first radio type of the plurality of radio types, and a second radio connection in accordance with the second radio type of the plurality of radio types, to a radio communication terminal device.

Data units of a same communication service may include the same selection indicator (e.g. a selection indicator of the same value).

The data units of a common communication flow may include the same selection indicator (e.g. a selection indicator of the same value). The communication flow may be an end-to-end communication flow. The communication flow may be an Internet Protocol communication flow. The data unit of a common Internet Protocol communication flow may be an Internet Protocol data packet.

The selecting may be performed in a PDCP layer.

A first radio type of the plurality of radio types and a second radio type of the plurality of radio types may provide one or more radio bearers.

A first radio type of the plurality of radio types and a second radio type of the plurality of radio types may provide one or more split radio bearers.

A communication service may be selected from a group of communication services consisting of:
- voice communication service;
- video communication service;
- text communication service; and
- multimedia communication service; and
- machine communication service.

In various embodiments, a method of processing a plurality of data units is provided. The method may include receiving one or more first data units in accordance with a first radio type and/or a second radio type. Each first data unit includes a selection indicator. The method may further include generating one or more second data units. The one or more first data units and the one or more second data units belong to a same communication flow. The method may further include selecting, using the selection indicator included in the respective first data unit and a stored set of one or more selection rules, for each second data unit of the one or more second data units, the radio type to transmit the one or more second data units. Each selection rule includes a rule to select one or more radio types at least based on a selection indicator.

The transmitting may include transmitting the one or more second data units in uplink communication direction.

The method may further include storing the set of one or more selection rules.

The selecting may be performed in a baseband modem.

The method may further include receiving at least a portion of the set of rules, and storing the same.

A first radio type of the plurality of radio types may include a radio communication in accordance with Long Term Evolution (LTE), e.g. LTE Advanced (LTE-A), e.g. eLTE.

A second radio type of the plurality of radio types may include a radio communication in accordance with 5G New Radio, in general any radio access technology in accordance with 5G, or 3GPP Rel. 15 and beyond, or IMT-2020 new radio..

The set of rules includes at least one element of a group of elements consisting of:
- one or more allowed radio access types;
- one or more preferred radio access types; and
- one or more refused radio access types.

Second data units of a same communication service may include the same selection indicator (e.g. a selection indicator of the same value).

The communication flow may be an end-to-end communication flow.

The end-to-end communication flow may be an Internet Protocol communication flow.

The one or more first data units and/or the one or more second data units may be an Internet Protocol data packet.

The selecting may be performed in a PDCP layer.

A communication service may be selected from a group of communication services consisting of:
- voice communication service;
- video communication service;
- text communication service; and
- multimedia communication service; and
- machine communication service.

The method may be performed in a radio communication terminal device.

In the drawings, the same reference characters generally refer to the same parts throughout the different views. The drawings are not necessarily to scale, emphasis is instead generally being placed upon illustrating the principles of the invention. In the following description, various embodiments of the invention are described with reference to the following drawings, in which:
- FIG. 1: shows a portion of a radio communication system illustrating a communication flow in downlink direction in accordance with various embodiments;
- FIG. 2: shows a portion of a radio communication system illustrating a communication flow in uplink direction in accordance with various embodiments;
- FIG. 3: shows a radio access node in accordance with various embodiments;
- FIG. 4: shows a radio communication terminal device in accordance with various embodiments; and
- FIG. 5: shows a message flow diagram illustrating the message flow in the context of a bearer setup process in accordance with various embodiments;
- FIG. 6: shows a flow diagram illustrating a method of processing a plurality of data units in accordance with various embodiments; and
- FIG. 7: shows a flow diagram illustrating a method of processing a plurality of data units in accordance with various embodiments.

The following detailed description refers to the accompanying drawings that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

As used herein, a "circuit" may be understood as any kind of a logic implementing entity, which may be special purpose circuitry or a processor executing software stored in a memory, firmware, and any combination thereof. Furthermore, a "circuit" may be a hard-wired logic circuit or a programmable logic circuit such as a programmable processor, for example a microprocessor (for example a Complex Instruction Set Computer (CISC) processor or a Reduced Instruction Set Computer (RISC) processor). A "circuit" may also be a processor executing software, e.g., any kind of computer program, for example, a computer program using a virtual machine code, e.g., Java. Any other kind of implementation of the respective functions that will be described in more detail below may also be understood as a "circuit". It may also be understood that any two (or more) of the described circuits may be combined into one circuit.

5G communication networks aim to support a wide range of communication services with very different characteristics and transport requirements. For example, vehicle to vehicle (V2V, V2X) communication services may have very strict latency requirements, whereas High Definition (HD) video requires very high bit rates but is not that demanding in terms of latency. As the different radio access technologies (RAT) like evolved Long Term Evolution (eLTE) or Fifth Generation New Radio (5G NR) have very different performance characteristics with resect to e.g. throughput, latency, or coverage, a mechanism is provided which allows to influence the RAT selection based on the used communication service. Conventionally, this is only possible with the use of QCI, i.e. the decision needs to be done on Evolved Packet Core (EPC) bearer basis.

However, with the combination of Dual Connectivity split bearers and the new Internet Protocol (IP) flow based QoS framework, since multiple communication services are carried in a single EPC bearer, the core network (CN) can only indicate the QCI for the whole EPC bearer, and the RAN is not able to see what communication service is carried 'inside' the bearer. Therefore, the RAN is not able to take the communication service requirements into account when deciding which RAT to use for a downlink data packet.

As will be described in more detail below, various embodiments may relate to two parts, namely to an operation in downlink direction and to an optional enhancement for an operation in uplink direction. Furthermore, in this application, the interaction between radio access network and core network are described using the terminology known from EPC and LTE as used e.g. in 3GPP Rel. 13. It is understood that someone skilled in the art will be able to transfer the presented concepts also to upcoming mobile network architectures such as e.g. NextGen TR 23.799 (e.g. TR 23.799, Rel-14, Version 0.7.0) and TR 38.804 (e.g. TR 38.804, Rel-14, Version 0.2.0).

In downlink direction, the core network may indicate the radio access technology (RAT) selection rules to the radio access network (RAN) via a control plane signaling (e.g. using S1AP messaging) at the time of EPC bearer establishment. In addition, the core network may classify and mark the downlink data packets that are transmitted in a user plane based on the service type the data packet relates or belongs to. This classification could be based on a use of so-called deep packet inspection (DPI) (in other words, the header portion as well as the payload portion of the respective data packet is analyzed and thus the respective service the data packet belongs to may be determined). Upon reception of a downlink data packet, the RAN takes the RAT selection rules received via control plane signaling from core network into account when determining the proper RAT for each downlink packet.

In uplink direction the above may be enhanced so that the RAN sends the RAT selection rules to a radio communication terminal device such as e.g. a User Equipment (UE). The RAN also assigns the same marking to the downlink packets it received from the core network. The UE then creates a binding table similar between the IP flow and the RAT selection rule. The UE then uses the binding table to find out the proper RAT selection rule when sending out an uplink packet.

Thus, illustratively, communication service characteristics can be taken into account when selecting the RAT and when a single core network bearer carries multiple communication services.

In various embodiments, similar principles as in an IP flow based QoS framework as described in TR 23.799, Rel-14, Version 0.7.0, for example, may be implemented, but they are illustratively applied for a communication service based RAT selection, e.g. with DC split bearers. Various embodiments may relate to the operation in downlink direction and an optional enhancement to the operation in uplink direction.

In downlink direction the core network may indicate the RAT selection rules to the RAN via control plane signaling (e.g. S1AP) at the time of EPC (split) bearer establishment (also referred to as bearer setup process). In addition, the core network may classify and mark the downlink packets in user plane based on the communication service (type). This classification could be based on Deep Packet Inspection (DPI) as described in IP flow based QoS framework in TR 23.799, Rel-14, Version 0.7.0, for example,. Upon reception of a respective downlink packet, RAN may take the RAT selection rules received via control plane signaling from core network into account when determining the proper RAT for each downlink packet.

In uplink direction, the above may be enhanced so that the RAN sends the RAT selection rules to the UE (alternatively this signaling could be from core network carried transparently via RAN). RAN may also assign the same marking to the downlink packets it received from the core network. The UE may then create a binding table similar as described in TR 23.799, Rel-14, Version 0.7.0, for example, section 3.5 for IP flow based QoS framework. A difference is that in various embodiments the binding table may contain a binding of IP flow to the RAT selection rule. The UE then may use the binding table to find out the proper RAT selection rule when sending out an uplink packet.

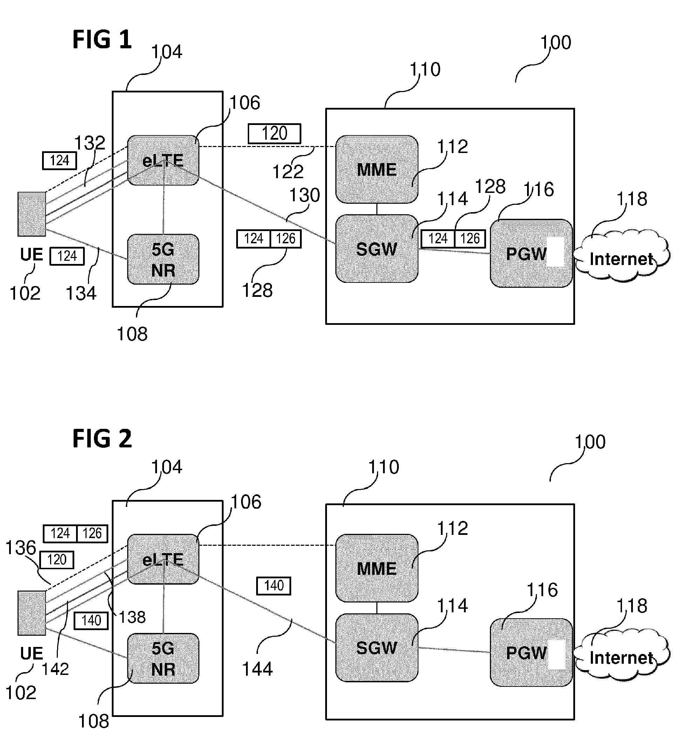

**FIG. 1** shows a portion of a radio communication system 100 illustrating a communication flow in downlink direction in accordance with various embodiments.

As shown in FIG. 1, the radio communication system 100 may include a plurality of radio communication terminal devices 102 (only one of them is shown in FIG. 1) such as e.g. one or more UEs, one or more nano equipments (NEs), and the like.

Furthermore, the radio communication system 100 may include a radio access network node arrangement 104, which may include a plurality of radio access network nodes 106, 108. Each radio access network node 106, 108 may provide a radio communication with the radio communication terminal device 102 over an air interface in accordance with a respective radio type, e.g. a respective radio access technology.

By way of example, the radio access network node arrangement 104 may include a first radio access network node 106 configured as an eNodeB. Thus, the first radio access network node 106 is configured to provide a radio type in accordance with Long Term Evolution (LTE). As an alternative, the first radio access network node 106 may be configured to provide a radio type in accordance with Long Term Evolution Advanced (LTE-A) or in accordance with evolved Long Term Evolution (eLTE). In general, the first radio access network node 106 may be configured in accordance with a 4G radio type, e.g. in accordance with a 4G radio access technology, or an evolution thereof.

Furthermore, the radio access network node arrangement 104 may include a second radio access network node 108 configured as a 5G New Radio. Thus, the second radio access network node 108 is configured to provide a radio type in accordance with a 5G communication technology (Fifth Generation). In general, the second radio access network node 108 may be configured in accordance with any 5G radio type, e.g. in accordance with any 5G radio access technology.

It is to be noted that the radio access network node arrangement 104 may include any number of radio access network nodes and the radio access network nodes may be configured in accordance with generally any suitable or desired radio access technology.

The radio communication system 100 may further include a core network 110 including a plurality of subcomponents depending on the respective radio communication technology. The core network 110 may be configured as an evolved packet core (EPC) in accordance with LTE, for example. By way of example, the core network 110 may include a Mobility Management Entity (MME) 112 coupled to the radio access network node arrangement 104 and therein to the various radio access network nodes 106, 108, and a Serving Gateway (SGW) 114 coupled to the MME 112 to the radio access network node arrangement 104 and therein to the various radio access network nodes 106, 108. Furthermore, the core network 110 may include a Packet Gateway (PGW) 116 coupled to the SGW 114.

The core network 110 may be coupled to the Internet 118. The Internet may include a plurality of client and server devices, wherein a server may provide one or more communication services. By way of example, a communication connection, for example communication session, of a communication service such as for example an application program, is one example of an end-to-end-connection. This end-to-end-connection may include or may be an Internet Protocol (IP) connection, which may also be referred to as an IP flow. The IP connection may be uniquely identified by two Internet Protocol (IP) addresses, namely a source IP address and a destination IP address. It is to be noted that the end-to-end-connection may be between two server devices (e.g. a server computer, such as for example an application server computer in the Internet 118), a terminal device (e.g. a radio communication terminal device) and a server device, or between two terminal devices (e.g. between two radio communication terminal devices).

In various embodiments, a communication service may include or may be a communication such as for example:
- a voice communication service (in other words, a communication service that only includes audio data);
- a video communication service (in other words, a communication service that includes video data and optionally in addition audio data and/or text data);
- a text communication service (in other words, a communication service that only includes text data);
- multimedia communication service (in other words, a communication service that includes video data, audio data and/or text data); and
- a machine communication service (in other words, a communication service that includes information reporting sensor data or sending action commands to or from a machine).

More concrete examples for a communication service may include:
- Voice over Long Term Evolution (VoLTE);
- Vehicle to Vehicle communication;
- Sensor readings from and actuation commands to machines like vending machines, solar panels, electric vehicle batteries, containers or construction machinery;
- Video streaming application;
- Virtual reality and augmented reality application;
- Audio streaming application;
- Mobile gaming application;
- Text message transmission; and the like.

Many communication services have specific requirements and characteristics with respect to the transmission of the data units, for example data packets, relating to or belonging to the respective communication service. By way of example, different requirements may occur with respect to latency, jitter, quality of service, minimum bandwidth, minimum bit error rate, packet loss, as little number of handovers as possible, radio coverage, spectrum efficiency, and the like.

Just for illustrative purposes, on the one hand, a VoLTE communication service requires a stable communication connection with as little number of hand overs as possible. On the other hand, a vehicle to vehicle communication may require a low latency in the data transmission. Thus, already this simple example illustrates the possibly very different demands with respect to the transmission of the data packets related or belonging to the respective communication service.

Furthermore, the radio communication system 100 is configured in accordance with the communication standard TS 36.300 (e.g. Version 12.10.0) and is configured to provide the option of a "Dual Connectivity" and is thus configured to provide so called split bearers. In other words, the radio communication system 100, and therein the radio access network arrangement 104 is configured to provide a plurality of bearers (in other words a plurality of different radio access network connections via different radio access nodes (e.g. 106, 108) for exactly one single logical communication connection to the core network 110. Thus, the radio communication system 100 is capable of splitting one single logical connection into a plurality of radio connections using different radio types such as different radio access technologies or the same radio access technologies with different operation parameters (in a transparent manner for the core network). As will be described in more detail below, this mechanism will be used to optimize the assignment of the radio types to the data packets of different communication services.

To do this, the core network 110 may generate a set of one or more selection rules. Each selection rule includes a rule to select one or more radio types at least based on a selection indicator. By way of example, a selection rule may include a mapping instruction that maps a selection indicator (which may for example be a simple integer value or any other kind of unique identifier) to one or more radio types to be used for the transmission of data units, for example data packets, that are marked with the respective selection indicator, as will be described in more detail below.

In various embodiments, a selection rule may be in a similar format as described in TS 36.323, page 10, however, assigned e.g. to each communication flow, e.g. to each IP flow instead of a radio bearer as described in TS 36.323, page 10.

A default selection rule may be provided for each data packet which does not have an assigned selection indicator. A default selection rule may e.g. be to use all available downlink RATs, e.g. eLTE and 5G NR for the transmission of the data packet(s) of such a communication flow, e.g. IP flow.

In general, a table of such a set of a plurality of selection rules may have the following structure and content:

| **RAT rule number (Selection indicator)** | **RAT rule content** |
|---|---|
| 1 | X |
| 2 | Y |
| 3 | Z |

In a concrete example, a table of such a set of a plurality of selection rules may have the following structure and content:

| **RAT rule number (Selection indicator)** | **RAT rule content** |
|---|---|
| 1 | Select only eLTE for the transmission of the respective data unit, for example of the respective data packet |
| 2 | Select only 5G NR for the transmission of the respective data unit, for example of the respective data packet |
| 3 | Select either eLTE or 5G NR for the transmission of the respective data unit, for example of the respective data packet |

As will be described in more detail below as well, the selection of the radio type, for example the radio access technology (RAT) may be performed during the bearer set up procedure, which also will be described in more detail below. However, the selection of the radio type (e.g. of the RAT) may also be performed at any other appropriate or desired time. In various embodiments, the MME 112 may generate the set of selection rules and may transmit the same to the radio access network node arrangement 104, in more detail to one or more of the radio access network nodes 106, 108.

Optionally, in accordance with the dual connectivity of TS 36.300 (e.g. TS 36.300 Version 12.10.0), the radio communication system 100, one of the radio access network nodes 106, 108 may be designated as the Master eNB (MeNB) and another one of the radio access network nodes 106, 108 may be designated as the Secondary eNB (SeNB). The role of the MeNB may be either performed by the eLTE or 5G NR technology, depending on the network deployment and operator choice.

In this example, it is assumed that the first radio access network node 106 (e.g. the eLTE node 106) is assigned the role of the MeNB and the second radio access network node 108 (e.g. the 5G NR node 108) is assigned the role of the SeNB.

The MME 112 may transmit the set of selection rules to the MeNB, in this case to the first radio access network node 106.

In general, the set of selection rules may be transmitted from the core network 110 to one or more of the radio access network nodes 106, 108 of the radio access network node arrangement 104 using control plane signaling (in the case of an LTE core network, the S1 application protocol may be used, in the case of a 5G core network, the transmission may be realized via the NG2 interface).

In other words, the set of selection rules 120 may be transmitted from the core network 110 to one or more of the radio access network nodes 106, 108 of the radio access network node arrangement 104, e.g. to the first radio access network node 106, via a control plane signaling connection 122 as shown in FIG. 1. In various embodiments, the set of selection rules 120 may be defined by the one or more of the radio access network nodes 106, 108 of the radio access network node arrangement 104.

The first radio access network node 106 receives the set of selection rules 120 and stores the same in a memory, as will be described in more detail below.

Furthermore, for each downlink transmitted data packet 124 that is subject to the described transmission scheme, the core network 110, for example the PGW 116 assigns a selection indicator 126 to the data packet 124. In various embodiments, one single and unique selection indicator 126 may be provided for marking all data packets 124 of one common IP flow. Illustratively, the selection indicator 126 serves as a key for the selection of one or more RATs performed in the RAN(s) 106, 108 using the set of one or more selection rules 120. Thus, the PGW 116 generates a message 128 including the data packet 124 and the selection indicator 126 and transmits the same to one or more of the radio access nodes 106, 108, via the SGW 114 using a user plane connection 130. In this example, the message 128 may be transmitted to the first radio access node 106 (in the case of an LTE core network, the GTP-U application protocol using the S1-U interface may be used, in the case of a 5G core network, the transmission may be realized via the NG3 interface).

By way of example, the core network 110 may classify and mark the downlink data packets 124 based on the communication service the downlink data packet 124 of the respective IP flow relates to (in other words, belongs to). The core network 110, for example the PGW 116 may determine their respective communication service using deep packet inspection (DPI).

An exemplary structure of the user plane signaling illustrating a plurality of messages 130 having different selection indicators and different IP flows (identified e.g. by a source IP address and a destination IP address and a flow identifier), is shown in the following:

| **Downlink data packet IP flow** | **RAT rule number** |
|---|---|
| 10.10.10.10:8080 | 1 |
| 10.10.10.1:80 | 1 |
| 10.10.10.100:5060 | 2 |

After having received the message 128, the first radio access network node 106 determines the selection indicator 126 and, using the determined selection indicator 126 and the previously stored set of selection rules 120, determines the one or more RATs to be used for the transmission of the data packet 124 of the message 128.

In case the result of the application of the set of selection rules 122 to the selection indicator is that the data packets of the communication service of this IP flow should be transmitted only using a first RAT (i.e. the RAT provided by the first radio access network node 106), the data packet 124 will be transmitted to the UE 102 via using the first RAT, e.g. using a first radio access connection 132 between the first radio access network node 106 and the UE 102. By way of example, in case the IP flow relates to a voice service (such as e.g. VoLTE or Skype), the data packets of this IP flow may be transmitted via the eLTE air interface.

However, in case the result of the application of the set of selection rules 122 to the selection indicator is that the data packets of the communication service of this IP flow should be transmitted only using a second RAT (i.e. the RAT provided by the second radio access network node 108), the data packet 124 will be transmitted to the UE 102 via using the second RAT, e.g. using a second radio access connection 134 between the second radio access network node 108 and the UE 102. By way of example, in case the IP flow relates to a vehicle to vehicle communication service, the data packets of this IP flow may be transmitted via the 5G NR air interface.

**FIG. 2** shows a portion of a radio communication system illustrating a communication flow in uplink direction in accordance with various embodiments.

In order to optimize the air interface resources also in uplink direction, optionally, the one or more of the radio access network nodes 106, 108 of the radio access network node arrangement 104, e.g. the first radio access network node 106 may transmit the set of selection rules 120 to one or more radio communication terminal devices such as e.g. UE 102. The set of selection rules 120 may be transmitted using control plane signaling, e.g. using the PDCP.

To do this, the format of the set of selection rules 120 may be changed by the first radio access network node 106 (e.g. by the transmitter) from the format in which it received the set of selection rules 120 to a format that can be carried in access stratum signaling and to transmit the format converted set of selection rules 120 by means of access stratum signaling.

As an alternative, the first radio access network node 106, e.g. the transmitter may be configured to transparently pass the rules and transmit the rules which are unchanged in their format by means of non-access stratum signaling.

In other words, the set of selection rules 120 may be transmitted from the first radio access network node 106 to one or more of the radio communication terminal devices, e.g. to UE 102, via a further control plane signaling connection 136 as shown in FIG. 2.

The UE 102 receives the set of selection rules 120 and stores the same in a memory, as will be described in more detail below.

Furthermore, for each downlink transmitted data packet 124 that is subject to the described transmission scheme, e.g. the first radio access network node 106 transmits the message 128, i.e. the data packet 124 and the associated selection indicator 126, to the UE 102 indicated as the destination address (e.g. the IP destination address) e.g. of the communication flow (e.g. the IP flow) the message 128 belongs to.

The UE 102 generates and stores a binding table that includes a mapping of the data packets of a respective communication flow, e.g. an IP flow, in downlink direction and the RAT selection rule(s).

An exemplary structure of such a binding table is given below:

| **Uplink packet IP flow** | **RAT rule content** |
|---|---|
| 10.10.10.10:8080 | X |
| 10.10.10.1:80 | X |
| 10.10.10.100:5060 | Y |

Illustratively, the binding table is the result of a merging of the above-described set of selection rules 120 and the exemplary structure of the user plane signaling illustrating a plurality of messages 130 having different selection indicators and different IP flows.

When sending an uplink data packet 140, the UE 102 may use the binding table to determine the RAT selection rule and the RAT to be used for an uplink data packet 140 of a respective communication flow, e.g. of a respective IP flow. The UE 102 may then transmit the uplink data packet 140 via the correspondingly determined RAT, e.g. a user plane uplink connection 142 between the UE 102 and the first radio access network node 106.

The first radio access network node 106 receives the uplink data packet 140 and forwards the same to the core network 110, e.g. via a user plane connection 144 between the first radio access network node 106 and the SGW 114 of the core network 110. The core network 110 forwards the uplink data packet 140 to the uplink destination device of the communication flow, e.g. the IP flow.

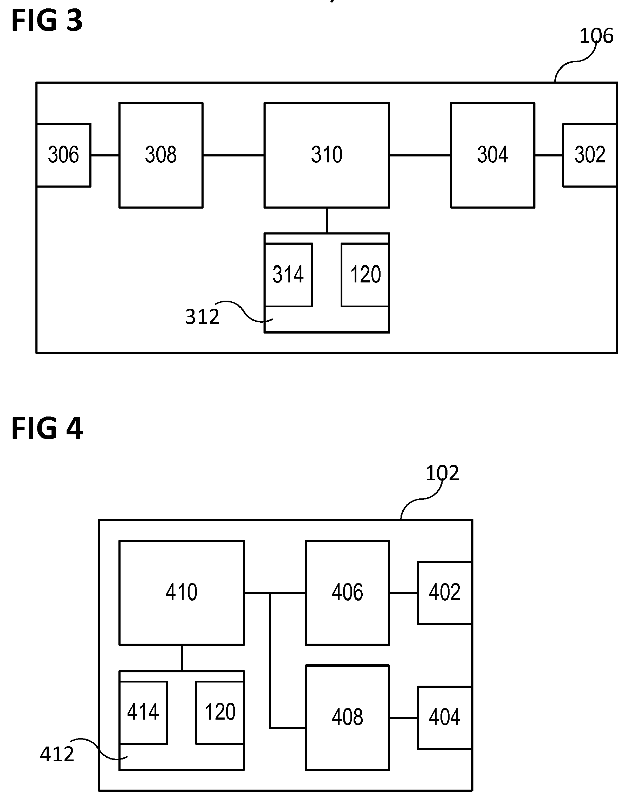

**FIG. 3** shows the first radio access network node 106 in accordance with various embodiments. The second radio access network node 108 may have a similar structure.

The first radio access network node 106 may include a first transceiver 302 configured to communicate with the core network 110, e.g. with the MME 112 and/or the SGW 114. The first transceiver 302 may be configured to receive and transmit signals in accordance with any desired protocol depending on the respective communication technology, e.g. a wireline communication protocol such as e.g. Ethernet, MPLS-TP, IP/MPLS, SDH/PDH, as well as optical technologies like OTN or PON or microwave technologies.

The first radio access network node 106 may further include a first baseband modem (in the following also referred to as first baseband unit) 304 coupled to the first transceiver 302 and configured to modulate/demodulate the data and control signals received via the first transceiver 302 or to be transmitted by the first transceiver 302 in accordance with the respectively provided communication protocol(s).

The first radio access network node 106 may include a second transceiver 306 configured to communicate with the radio communication terminal devices such as e.g. with UE 102. The second transceiver 306 may be configured to receive and transmit signals in accordance with any desired physical layer protocol depending on the respective communication technology, e.g. in accordance with the physical layer technology/technologies provided in accordance with LTE, LTE-A and/or eLTE (in case of the second radio access network node 108, the second transceiver 306 may e.g. be configured in accordance with the physical layer technology/technologies provided in accordance with 5G NR).

The first radio access network node 106 may further include a second baseband modem (in the following also referred to as second baseband unit) 308 coupled to the second transceiver 306 and configured to modulate/demodulate the data and control signals received via the second transceiver 306 or to be transmitted by the second transceiver 306 in accordance with the respectively provided communication protocol(s). The second baseband modem 308 may include e.g. an implementation of the PDCP protocol. The second baseband modem 308 may use the PDCP for the transmission of the data packets 124 and optionally of the messages 128.

The first baseband modem 304 and the second baseband modem 308 may be coupled to a processor 310, e.g. an application processor 310, which may also be included in the first radio access network node 106. Furthermore, the first radio access network node 106 may include a memory 312. The memory 312 may include volatile memory (such as e.g. Random Access Memory (RAM)) and/or non-volatile memory (such as e.g. Non-Volatile Random Access Memory (NVRAM) such as e.g. Flash Memory (e.g. Floating Gate Memory, Phase Change Random Access Memory, and the like). The memory 312 may include one or more separate memories. The memory 312 may store operation instructions 314 to operate the first radio access network node 106, e.g. to instruct the baseband modems 304, 308 and the transceivers 302, 306 as to how to process the respective control and data packets. The memory 312 may further store the set of selection rules 120 as described above. The first radio access network node 106 may store the RAT selection rules 120 as part of a respective UE context.

The first radio access network node 106 may read the marking in the downlink data packets 124, and based on the marking (in other words based on the selection indicator 128), may select the corresponding RAT selection rule, and based on the RAT selection rule, may set the values for the above parameters accordingly.

Furthermore, the first radio access network node 106 may convert the received marking in the user plane to the radio headers in Uu interface (e.g. a new PCDP header).

**FIG. 4** shows a radio communication terminal device 102 such as e.g. of UE 102, in accordance with various embodiments.

The UE 102 may include a first transceiver 402 configured to communicate with the first radio access network node 106 (e.g. in accordance with LTE, LTE-A, and/or eLTE) and a second transceiver 404 configured to communicate with the second radio access network node 108 (e.g. in accordance with 5G NR). The first transceiver 302 may be configured to receive and transmit signals in accordance with any desired physical layer protocol depending on the respective communication technology desired by the first radio access network node 106. The second transceiver 302 may be configured to receive and transmit signals in accordance with any desired physical layer protocol depending on the respective communication technology desired by the second radio access network node 108.

The UE 102 may further include a first baseband modem 406 coupled to the first transceiver 402 and configured to modulate/demodulate the data and control signals received via the first transceiver 402 or to be transmitted by the first transceiver 402 in accordance with the respectively provided communication protocol(s).

The UE 102 may further include a second baseband modem 408 coupled to the second transceiver 404 and configured to modulate/demodulate the data and control signals received via the second transceiver 404 or to be transmitted by the second transceiver 404 in accordance with the respectively provided communication protocol(s).

The first baseband modem 406 and the second baseband modem 408 may include e.g. an implementation of the PDCP protocol. The baseband modems 406, 408 may use the PDCP for the transmission of the data packets 124 and optionally of the messages 128.

The first baseband modem 406 and the second baseband modem 408 may be coupled to a processor 410, e.g. an application processor 410, which may also be included in the UE 102. Furthermore, the UE 102 may include a memory 412.

The memory 412 may include volatile memory (such as e.g. Random Access Memory (RAM)) and/or non-volatile memory (such as e.g. Non-Volatile Random Access Memory (NVRAM) such as e.g. Flash Memory (e.g. Floating Gate Memory, Phase Change Random Access Memory, and the like). The memory 412 may include one or more separate memories. The memory 412 may store operation instructions 414 to operate the UE 102, e.g. to instruct the baseband modems 406, 408 and the transceivers 402, 406 as to how to process the respective control and data packets. The memory 412 may further store the set of selection rules 120 as described above. The UE 102 may store the RAT selection rules 120 as part of a respective bearer context.

The application processor 410 may be configured to process data in accordance with any desired protocol above the transport protocol layers. The application processor 410 may be configured to process data in accordance with e.g. any application program such as for example in accordance with an Hypertext Transfer Protocol (HTTP), and the like.

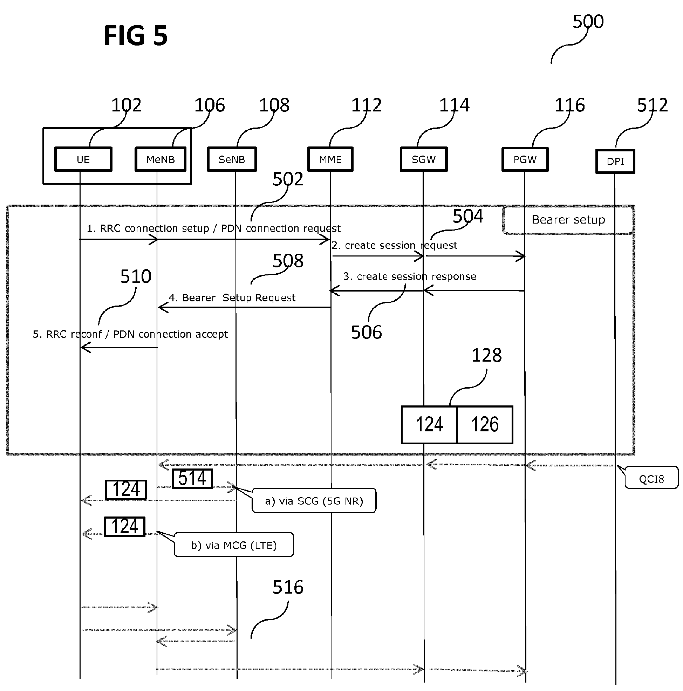

**FIG. 5** shows a message flow diagram 500 illustrating the message flow in the context of a bearer setup process in accordance with various embodiments.

In this example, the bearer setup process is started by the UE 102, which generates Radio Resource Control (RRC) connection setup / PDN connection request message 502 and may transmit the same to the first radio access network node 106 and to the MME 112.

After having received the RRC connection setup / PDN connection request message 502, the MME 112 generates a session request message 504 and may transmit the same to the PGW 116.

After having received the session request message 504, the PGW 116 generates a session response message 506 and may transmit the same to the SGW 114 and the MME 112.

As described above, the core network 110, e.g. the MME 112, may pre-configure the RAT selection rules 120 to the RANs at the bearer setup. The RAT selection rules 120 indicate how the values used in the packet markings (i.e. the values of the selection indicator) in the user plane are transformed into RAT preferences/selections.

After having received the session response message 506, the MME 112 may generate a bearer setup request message 508 and may transmit the same to first radio access network node 106, for example.

After having received the bearer setup request message 508, the first radio access network node 106 may generate an RRC reconf / PDN connection accept message 510 and may transmit the same to the UE 102. In this context it is to be noted that in various embodiments, (all or some of) the bearers are configured as split bearers, e.g. as defined in TS 36.300 (e.g. TS 36.300 Version 12.10.0). The RRC reconf / PDN connection accept message 510 may include and thus indicate the bearer type (and optionally the set of selection rules) to the UE 102.

After the bearer setup process has been completed as described above, a DPI process 512 may classify and mark the downlink packets 124 based on the respectively used communication service. Marking may be performed e.g. in a similar manner as the FPI as described e.g. in TR 23.799, Rel-14, Version 0.7.0, for example. Any other way of classifying and marking may also be employed in alternative embodiments.

After having received the message 128 including the data packet 124 and the selection indicator 126, the first radio access network node 106 may determine the data packet marking and may determine the suitable RAT(s) based on the previously stored set of selection rules 120. Since the bearer type is a split bearer, the PDCP layer may make the decision on the RAT based on the new indication in the user plane.

Furthermore the first radio access network node 106 may transmit a message 514 (including the data packet 124) to the second radio access network node 108 via an SCG (a 5G NR) radio connection, e.g. in case the data packet 124 should be transmitted to the UE 102 by the second radio access network node 108, e.g. using 5G NR RAT. In this case, the data packet 124 may be transmitted by the second radio access network node 108 to the UE 102. In case the data packet 124 should be transmitted by the first radio access network node 106, the data packet 124 is transmitted by the first radio access network node 106 using e.g. the LTE (or LTE-A or eLTE) RAT.

The UE 102 may then generate and transmit uplink data packets in a correspondingly inverse manner as described above depending on the respective communication flow (e.g. IP flow), the uplink data packet(s) belong to. This is symbolized in FIG. 5 by arrows 516.

For the uplink transmission, the UE 102 may implement a similar concept as the so-called Reflective QoS as described in TR 23.799, Rel-14, Version 0.7.0, for example, to determine the RAT based on the binding of the communication flow, e.g. IP flow, to the RAT selection rule.

It is to be noted that the embodiments are not limited to selecting the RAT among LTE and 5G NR radio access technologies. Various embodiments can be similarly used also e.g. to select among LTE and WLAN radios when LTE-WLAN aggregation is used, or to select between LTE pico and macro cells in small cell deployments, both described in TS 36.300 (e.g. TS 36.300 Version 12.10.0), to give some examples.

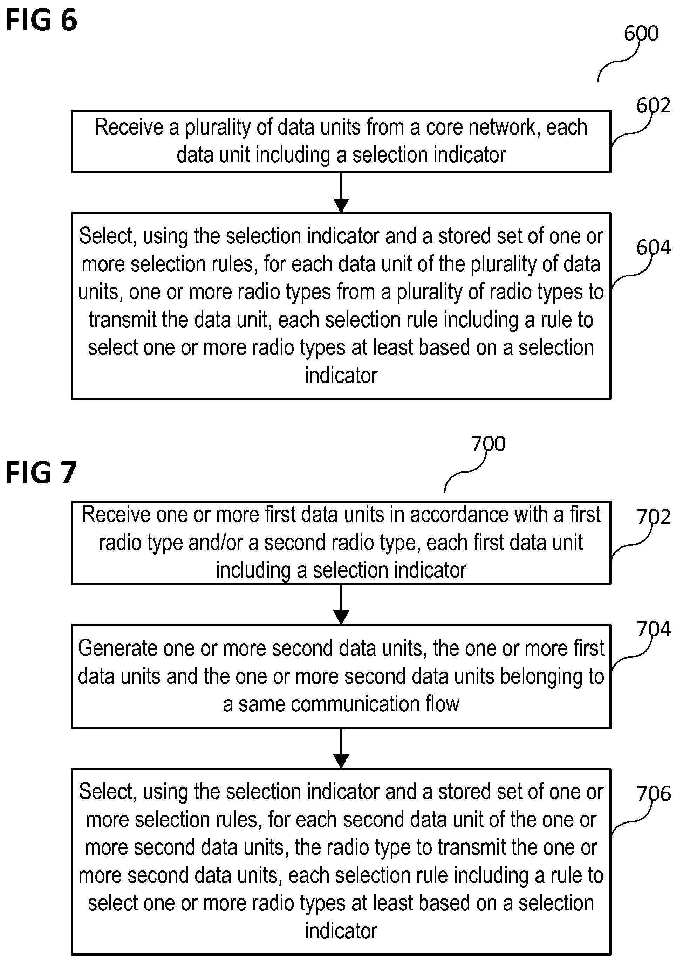

FIG. 6 shows a flow diagram illustrating a method 600 of processing a plurality of data units in accordance with various embodiments.

The method 600 may include, in 602, receiving a plurality of data units from a core network, each data unit including a selection indicator. The method 600 may further include, in 604, selecting, using the selection indicator and a stored set of one or more selection rules, for each data unit of the plurality of data units, one or more radio types from a plurality of radio types to transmit the data unit, each selection rule including a rule to select one or more radio types at least based on a selection indicator.

FIG. 7 shows a flow diagram illustrating a method 700 of processing a plurality of data units in accordance with various embodiments.

The method 700 may include, in 702, receiving one or more first data units in accordance with a first radio type and/or a second radio type, each first data unit including a selection indicator. The method 700 may further include, in 704, generating one or more second data units, the one or more first data units and the one or more second data units belonging to a same communication flow, and, in 706, selecting, using the selection indicator and a stored set of one or more selection rules, for each second data unit of the one or more second data units, the radio type to transmit the one or more second data units, each selection rule including a rule to select one or more radio types at least based on a selection indicator.

The following describes an ASN.1 implementation of a PDCP configuration in accordance with various embodiments.

### PDCP-Config

The IE *PDCP-Config* is used to set the configurable PDCP parameters for data radio bearers.

### PDCP-Config information element

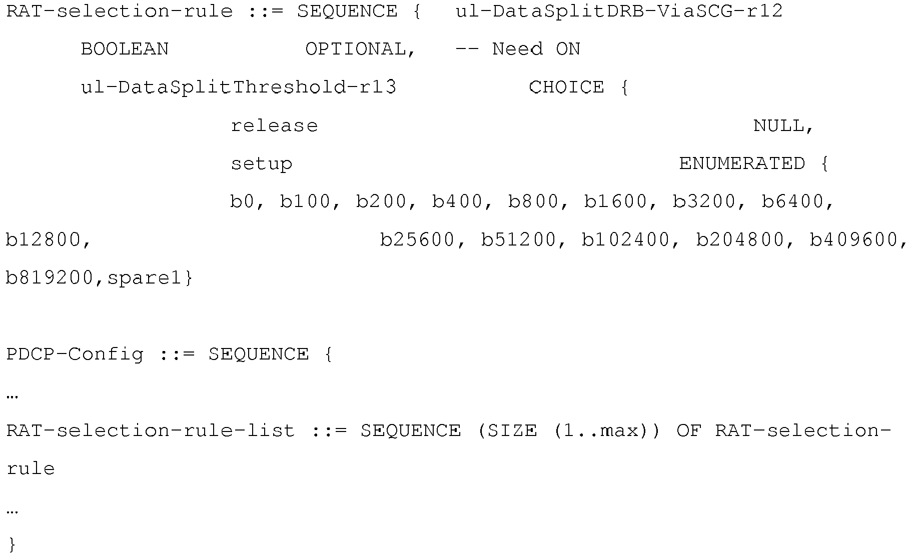

Various examples are described below:
Example 1 is a radio access network node arrangement. The radio access network node arrangement may include a radio access network node arrangement. The radio access network node arrangement may include a first radio access network node configured to provide a radio connection in accordance with a first radio type, a second radio access network node configured to provide a radio connection in accordance with a second radio type, and a receiver configured to receive a plurality of data units from a core network. Each data unit includes a selection indicator. The radio access network node arrangement may further include a selection circuit configured to select, using the selection indicator and a stored set of one or more selection rules, for each data unit of the plurality of data units, one or more of the radio types to transmit the data unit. Each selection rule includes a rule to select one or more radio types at least based on a selection indicator.
In Example 2, the subject matter of Example 1 can optionally include that the radio access network node arrangement further includes a transmitter configured to transmit the data unit in accordance with the selected radio type.
In Example 3, the subject matter of Example 2 can optionally include that the transmitter is configured to transmit the data unit in downlink communication direction.
In Example 4, the subject matter of any one of Examples 1 to 3 can optionally include that the radio access network node arrangement further includes a memory configured to store the set of one or more selection rules.
In Example 5, the subject matter of any one of Examples 1 to 4 can optionally include that the radio access network node arrangement further includes a baseband modem configured to provide modulation and demodulation of signals.
In Example 6, the subject matter of Example 5 can optionally include that the baseband modem includes the selection circuit.
In Example 7, the subject matter of any one of Examples 1 to 6 can optionally include that the receiver is further configured to receive at least a portion of the set of rules.
In Example 8, the subject matter of Example 7 can optionally include that the memory is further configured to store at least a portion of the set of rules in the memory.
In Example 9, the subject matter of any one of Examples 2 to 8 can optionally include that the transmitter is further configured to transmit at least a portion of the set of rules to a radio communication device.
In Example 10, the subject matter of any one of Examples 2 to 9 can optionally include that the first radio access network node and/or the second radio access network node are/is configured to convert the rules to a format that can be carried in access stratum signaling and transmit it with access stratum signaling.
In Example 11, the subject matter of any one of Examples 2 to 9 can optionally include that the first radio access network node and/or the second radio access network node are/is further configured to transparently pass the rules and transmit the same with non-access stratum signaling.
In Example 12, the subject matter of any one of Examples 1 to 11 can optionally include that the first radio access network node is configured to provide a radio communication in accordance with Long Term Evolution.
In Example 13, the subject matter of any one of Examples 1 to 12 can optionally include that the second radio access network node is configured to provide a radio communication in accordance with 5G New Radio.
In Example 14, the subject matter of any one of Examples 1 to 13 can optionally include that the set of rules includes at least one element of a group of elements consisting of: one or more allowed radio access types; one or more preferred radio access types; and one or more refused radio access types.
In Example 15, the subject matter of any one of Examples 1 to 14 can optionally include that the radio access network node arrangement is configured to provide a logical connection to the core network, wherein the logical connection comprises a plurality of radio connections, a first radio connection in accordance with the first radio type, and a second radio connection in accordance with the second radio type, to a radio communication terminal device.
In Example 16, the subject matter of any one of Examples 1 to 15 can optionally include that data units of a same communication service comprise the same selection indicator.
In Example 17, the subject matter of any one of Examples 1 to 16 can optionally include that the data units of a common communication flow comprise the same selection indicator.
In Example 18, the subject matter of Example 17 can optionally include that the communication flow is an end-to-end communication flow.
In Example 19, the subject matter of Example 18 can optionally include that the communication flow is an Internet Protocol communication flow.
In Example 20, the subject matter of Example 19 can optionally include that the data unit of a common Internet Protocol communication flow is an Internet Protocol data packet.
In Example 21, the subject matter of any one of Examples 1 to 20 can optionally include that the selection circuit is implemented in a PDCP circuit.
In Example 22, the subject matter of any one of Examples 1 to 21 can optionally include that the first radio access network node and the second radio access network node are configured to provide one or more radio bearers.
In Example 23, the subject matter of Example 22 can optionally include that the first radio access network node and the second radio access network node are configured to provide one or more split radio bearers.
In Example 24, the subject matter of any one of Examples 16 to 23 can optionally include that a communication service is selected from a group of communication services consisting of: voice communication service; video communication service; text communication service; multimedia communication service; and machine communication service.
Example 25 is a radio communication device. The radio communication device may include a first transceiver configured in accordance with a first radio type, and a second transceiver configured in accordance with a first radio type. The first transceiver and/or the second transceiver is configured to receive one or more first data units. Each first data unit comprises a selection indicator. The radio communication device may further include a data unit generator configured to generate one or more second data units. The one or more first data units and the one or more second data units belong to a same communication flow. The radio communication device may further include a selection circuit configured to select, using the selection indicator and a stored set of one or more selection rules, for each second data unit of the one or more second data units, the radio type to transmit the one or more second data units. Each selection rule includes a rule to select one or more radio types at least based on a selection indicator.
In Example 26, the subject matter of Example 25 can optionally include that the first transceiver and/or the second transceiver is configured to transmit the one or more second data unit in uplink communication direction.
In Example 27, the subject matter of any one of Examples 25 or 26 can optionally include that the radio communication device further includes a memory configured to store the set of one or more selection rules.
In Example 28, the subject matter of any one of Examples 25 to 27 can optionally include that the radio communication device further includes a baseband modem configured to provide modulation and demodulation of signals.
In Example 29, the subject matter of Example 28 can optionally include that the baseband modem includes the selection circuit.
In Example 30, the subject matter of any one of Examples 25 to 29 can optionally include that the first transceiver and/or the second transceiver is further configured to receive at least a portion of the set of rules.
In Example 31, the subject matter of Example 30 can optionally include that the memory is further configured to store the at least a portion of the set of rules in the memory.
In Example 32, the subject matter of any one of Examples 25 to 31 can optionally include that the first transceiver is configured to provide a radio communication in accordance with Long Term Evolution.
In Example 33, the subject matter of any one of Examples 25 to 32 can optionally include that the second transceiver is configured to provide a radio communication in accordance with 5G New Radio.
In Example 34, the subject matter of any one of Examples 25 to 33 can optionally include that the set of rules includes at least one element of a group of elements consisting of: one or more allowed radio access types; one or more preferred radio access types; and one or more refused radio access types.
In Example 35, the subject matter of any one of Examples 25 to 34 can optionally include that second data units of a same communication service comprise the same selection indicator.
In Example 36, the subject matter of any one of Examples 25 to 35 can optionally include that the communication flow is an end-to-end communication flow.
In Example 37, the subject matter of Example 36 can optionally include that the end-to-end communication flow is an Internet Protocol communication flow.
In Example 38, the subject matter of Example 37 can optionally include that the one or more first data units and/or the one or more second data units is an Internet Protocol data packet.
In Example 39, the subject matter of any one of Examples 25 to 38 can optionally include that the selection circuit is implemented in a PDCP circuit.
In Example 40, the subject matter of any one of Examples 25 to 39 can optionally include that a communication service is selected from a group of communication services consisting of: voice communication service; video communication service; text communication service; multimedia communication service; and machine communication service.
In Example 41, the subject matter of any one of Examples 25 to 40 can optionally include that the radio communication device is configured as a radio communication terminal device.
Example 42 is a method of processing a plurality of data units. The method may include receiving a plurality of data units from a core network. Each data unit comprises a selection indicator. The method may further include selecting, using the selection indicator and a stored set of one or more selection rules, for each data unit of the plurality of data units, one or more radio types from a plurality of radio types to transmit the data unit. Each selection rule includes a rule to select one or more radio types at least based on a selection indicator.
In Example 43, the subject matter of Example 42 can optionally include that the method further includes transmitting the data unit in accordance with the selected radio type.
In Example 44, the subject matter of Example 43 can optionally include that the transmitting includes transmitting the data unit in downlink communication direction.
In Example 45, the subject matter of any one of Examples 42 to 44 can optionally include that the method further includes storing the set of one or more selection rules.
In Example 46, the subject matter of any one of Examples 42 to 45 can optionally include that the selecting is performed in a baseband modem.
In Example 47, the subject matter of any one of Examples 42 to 46 can optionally include that the method further includes receiving at least a portion of the set of rules from a core network.
In Example 48, the subject matter of Example 47 can optionally include that the method further includes storing the at least a portion of the set of rules.
In Example 49, the subject matter of any one of Examples 43 to 48 can optionally include that the method further includes transmitting at least a portion of the set of rules to a radio communication device.
In Example 50, the subject matter of any one of Examples 42 to 49 can optionally include that the method further includes converting the selection rules to a format that can be carried in access stratum signaling, and transmitting the same with access stratum signaling.
In Example 51, the subject matter of any one of Examples 42 to 49 can optionally include that the method further includes transparently passing the selection rules, and transmitting the same with non-access stratum signaling.
In Example 52, the subject matter of any one of Examples 42 to 51 can optionally include that a first radio type of the plurality of radio types includes a radio communication in accordance with Long Term Evolution.
In Example 53, the subject matter of any one of Examples 42 to 52 can optionally include that a second radio type of the plurality of radio types comprises a radio communication in accordance with 5G New Radio.
In Example 54, the subject matter of any one of Examples 42 to 53 can optionally include that the set of rules includes at least one element of a group of elements consisting of: one or more allowed radio access types; one or more preferred radio access types; and one or more refused radio access types.
In Example 55, the subject matter of any one of Examples 42 to 54 can optionally include that the method further includes providing a logical connection to the core network. The logical connection includes a plurality of radio connections, a first radio connection in accordance with a first radio type of the plurality of radio types, and a second radio connection in accordance with the second radio type of the plurality of radio types, to a radio communication terminal device.
In Example 56, the subject matter of any one of Examples 42 to 55 can optionally include that data units of a same communication service include the same selection indicator.
In Example 57, the subject matter of any one of Examples 42 to 56 can optionally include that the data units of a common communication flow include the same selection indicator.
In Example 58, the subject matter of Example 57 can optionally include that the communication flow is an end-to-end communication flow.
In Example 59, the subject matter of Example 58 can optionally include that the communication flow is an Internet Protocol communication flow.
In Example 60, the subject matter of Example 59 can optionally include that the data unit of a common Internet Protocol communication flow is an Internet Protocol data packet.
In Example 61, the subject matter of any one of Examples 42 to 60 can optionally include that the selecting is performed in a PDCP layer.
In Example 62, the subject matter of any one of Examples 42 to 61 can optionally include that a first radio type of the plurality of radio types and a second radio type of the plurality of radio types provide one or more radio bearers.
In Example 63, the subject matter of Example 62 can optionally include that a first radio type of the plurality of radio types and a second radio type of the plurality of radio types provide one or more split radio bearers.
In Example 64, the subject matter of any one of Examples 42 to 63 can optionally include that a communication service is selected from a group of communication services consisting of: voice communication service; video communication service; text communication service; multimedia communication service; and machine communication service.
Example 65 is a method of processing a plurality of data units. The method may include receiving one or more first data units in accordance with a first radio type and/or a second radio type. Each first data unit includes a selection indicator. The method may further include generating one or more second data units. The one or more first data units and the one or more second data units belong to a same communication flow. The method may further include selecting, using the selection indicator and a stored set of one or more selection rules, for each second data unit of the one or more second data units, the radio type to transmit the one or more second data units. Each selection rule includes a rule to select one or more radio types at least based on a selection indicator.
In Example 66, the subject matter of Example 65 can optionally include that the transmitting includes transmitting the one or more second data unit in uplink communication direction.
In Example 67, the subject matter of any one of Examples 65 or 66 can optionally include that the method further includes storing the set of one or more selection rules.
In Example 68, the subject matter of any one of Examples 65 to 67 can optionally include that the selecting is performed in a baseband modem.
In Example 69, the subject matter of any one of Examples 65 to 68 can optionally include that the method further includes receiving at least a portion of the set of rules.
In Example 70, the subject matter of Example 69 can optionally include that the method further includes storing the at least a portion of the set of rules in a memory.
In Example 71, the subject matter of any one of Examples 65 to 70 can optionally include that a first radio type of the plurality of radio types includes a radio communication in accordance with Long Term Evolution.
In Example 72, the subject matter of any one of Examples 65 to 71 can optionally include that a second radio type of the plurality of radio types includes a radio communication in accordance with 5G New Radio.
In Example 73, the subject matter of any one of Examples 65 to 72 can optionally include that the set of rules includes at least one element of a group of elements consisting of: one or more allowed radio access types; one or more preferred radio access types; and one or more refused radio access types.
In Example 74, the subject matter of any one of Examples 65 to 73 can optionally include that second data units of a same communication service include the same selection indicator.
In Example 75, the subject matter of any one of Examples 65 to 74 can optionally include that the communication flow is an end-to-end communication flow.
In Example 76, the subject matter of Example 75 can optionally include that the end-to-end communication flow is an Internet Protocol communication flow.
In Example 77, the subject matter of Example 76 can optionally include that the one or more first data units and/or the one or more second data units is an Internet Protocol data packet.
In Example 78, the subject matter of any one of Examples 65 to 77 can optionally include that the selecting is performed in a PDCP layer.
In Example 79, the subject matter of any one of Examples 74 to 78 can optionally include that a communication service is selected from a group of communication services consisting of: voice communication service; video communication service; text communication service; multimedia communication service; and machine communication service.
In Example 80, the subject matter of any one of Examples 65 to 79 can optionally include that the method is performed in a radio communication terminal device.

While the invention has been particularly shown and described with reference to specific embodiments, it should be understood by those skilled in the art that various changes in form and detail may be made therein without departing from the spirit and scope of the invention as defined by the appended claims. The scope of the invention is thus indicated by the appended claims and all changes which come within the meaning and range of equivalency of the claims are therefore intended to be embraced.

## Claims

1. A radio access network node arrangement, comprising:
• a first radio access network node configured to provide a radio connection in accordance with a first radio type;
• a second radio access network node configured to provide a radio connection in accordance with a second radio type;
• a receiver configured to receive a plurality of data units from a core network, wherein each data unit comprises a selection indicator; and
• a selection circuit configured to select, using the selection indicator and a stored set of one or more selection rules, for each data unit of the plurality of data units, one or more of the radio types to transmit the data unit, wherein each selection rule comprises a rule to select one or more radio types at least based on a selection indicator.

2. The radio access network node arrangement of claim 1, further comprising:
• a transmitter configured to transmit the data unit in accordance with the selected radio type;
• wherein preferably the transmitter is configured to transmit the data unit in downlink communication direction.

3. The radio access network node arrangement of any one of claims 1 or 2, further comprising:
wherein the receiver is further configured to receive at least a portion of the set of rules.
wherein preferably the memory is further configured to store the at least a portion of the set of rules in the memory.

4. The radio access network node arrangement of any one of claims 2 or 3,
wherein the transmitter is further configured to transmit at least a portion of the set of rules to a radio communication device.

5. The radio access network node arrangement of any one of claims 2 to 4,
wherein the first radio access network node and/or the second radio access network node are/is configured to convert the rules to a format that can be carried in access stratum signaling and transmit it with access stratum signaling.

6. The radio access network node arrangement of any one of claims 2 to 4,
wherein the first radio access network node and/or the second radio access network node are/is further configured to transparently pass the rules and transmit the same with non-access stratum signaling.

7. The radio access network node arrangement of any one of claims 1 to 6,
• wherein the first radio access network node is configured to provide a radio communication in accordance with Long Term Evolution; and/or
• wherein the second radio access network node is configured to provide a radio communication in accordance with 5G New Radio.

8. The radio access network node arrangement of any one of claims 1 to 7,
wherein the set of rules includes at least one element of a group of elements consisting of:
• one or more allowed radio access types;
• one or more preferred radio access types; and
• one or more refused radio access types.

9. The radio access network node arrangement of any one of claims 1 to 8,
wherein the data units of a common communication flow comprise the same selection indicator;
wherein preferably the communication flow is an end-to-end communication flow;
wherein further preferably the communication flow is an Internet Protocol communication flow.

10. A radio communication device, comprising:
• a first transceiver configured in accordance with a first radio type;
• a second transceiver configured in accordance with a second radio type;
• wherein the first transceiver and/or the second transceiver is configured to receive one or more first data units, wherein each first data unit comprises a selection indicator;
• a data unit generator configured to generate one or more second data units, wherein the one or more first data units and the one or more second data units belong to a same communication flow; and
• a selection circuit configured to select, using the selection indicator and a stored set of one or more selection rules, for each second data unit of the one or more second data units, the radio type to transmit the one or more second data units, wherein each selection rule comprises a rule to select one or more radio types at least based on a selection indicator.

11. A method of processing a plurality of data units, the method comprising:
• receiving a plurality of data units from a core network, wherein each data unit comprises a selection indicator; and
• selecting, using the selection indicator and a stored set of one or more selection rules, for each data unit of the plurality of data units, one or more radio types from a plurality of radio types to transmit the data unit, wherein each selection rule comprises a rule to select one or more radio types at least based on a selection indicator.

12. The method of claim 11, further comprising:
receiving at least a portion of the set of rules from a core network.

13. The method of any one of claims 11 or 12, further comprising:
• converting convert the selection rules to a format that can be carried in access stratum signaling and transmitting the same with access stratum signaling; or
• transparently passing the selection rules and transmitting the same with non-access stratum signaling.

14. The method of any one of claims 11 to 13,
• wherein a first radio type of the plurality of radio types comprises a radio communication in accordance with Long Term Evolution; and/or
• wherein a second radio type of the plurality of radio types comprises a radio communication in accordance with 5G New Radio.

15. A method of processing data units, comprising:
• receiving one or more first data units in accordance with a first radio type and/or a second radio type, wherein each first data unit comprises a selection indicator;
• generating one or more second data units, wherein the one or more first data units and the one or more second data units belong to a same communication flow; and
• selecting, using the selection indicator and a stored set of one or more selection rules, for each second data unit of the one or more second data units, the radio type to transmit the one or more second data units, wherein each selection rule comprises a rule to select one or more radio types at least based on a selection indicator.

## Amended claims

### Amended claims in accordance with Rule 137(2) EPC.

1. A radio access network node arrangement (104), comprising:
• a first radio access network node (106) configured to provide a radio connection in accordance with a first radio type;
• a second radio access network node (108) configured to provide a radio connection in accordance with a second radio type;
• a receiver (302) located in a radio access network and configured to receive a plurality of data units from a core network (110), wherein each data unit is marked with a selection indicator; and
• a selection circuit (308) located in the radio access network and configured to select, using the selection indicator and a stored set of one or more selection rules, for each data unit of the plurality of data units, one or more of the radio types to transmit the data unit, wherein each selection rule comprises a rule to select one or more radio types at least based on a selection indicator.

2. The radio access network node arrangement (104) of claim 1, further comprising:
a transmitter (306) configured to transmit the data unit in accordance with the selected radio type.

3. The radio access network node arrangement (104) of any one of claims 1 or 2, further comprising:
a memory (312),
wherein the receiver (302) is further configured to receive at least a portion of the set of rules.
wherein the memory (312) is further configured to store the at least a portion of the set of rules in the memory (312).

4. The radio access network node arrangement (104) of any one of claims 2 or 3,
wherein the transmitter (306) is further configured to transmit at least a portion of the set of rules to a radio communication device (102).

5. The radio access network node arrangement (104) of any one of claims 2 to 4,
wherein the first radio access network node (106) and/or the second radio access network node (108) are/is configured to convert the rules to a format that can be carried in access stratum signaling and transmit it with access stratum signaling.

6. The radio access network node arrangement (104) of any one of claims 2 to 4,
wherein the first radio access network node (106) and/or the second radio access network node (108) are/is further configured to transparently pass the rules and transmit the same with non-access stratum signaling.

7. The radio access network node arrangement (104) of any one of claims 1 to 6,
• wherein the first radio access network node (106) is configured to provide a radio communication in accordance with Long Term Evolution; and/or
• wherein the second radio access network node (108) is configured to provide a radio communication in accordance with 5G New Radio.

8. The radio access network node arrangement (104) of any one of claims 1 to 7,
wherein the set of rules includes at least one element of a group of elements consisting of:
• one or more allowed radio access types;
• one or more preferred radio access types; and
• one or more refused radio access types.

9. The radio access network node arrangement (104) of any one of claims 1 to 8,
wherein the data units of a common communication flow comprise the same selection indicator.

10. A radio communication device (102), comprising:
• a first transceiver (402) configured in accordance with a first radio type;
• a second transceiver (404) configured in accordance with a second radio type;
• wherein the first transceiver (402) and/or the second transceiver (404) is configured to receive one or more first data units from a radio access network node arrangement (104), wherein each first data unit comprises a selection indicator;
• a data unit generator (410) configured to generate one or more second data units, wherein the one or more first data units and the one or more second data units belong to a same communication flow; and
• a selection circuit (406, 408) configured to select, using the selection indicator and a stored set of one or more selection rules, for each second data unit of the one or more second data units, the radio type to transmit the one or more second data units to the radio access network node arrangement (104), wherein each selection rule comprises a rule to select one or more radio types at least based on a selection indicator,
• wherein the first transceiver and/or the second transceiver is further configured to receive at least a portion of the stored set of one or more selection rules from the radio access network node arrangement (104).

11. A method of processing a plurality of data units at a radio access network node arrangement (104), the method comprising:
• receiving a plurality of data units from a core network (110), wherein each data unit is marked with a selection indicator; and
• selecting, using the selection indicator and a stored set of one or more selection rules, for each data unit of the plurality of data units, one or more radio types from a plurality of radio types to transmit the data unit, wherein each selection rule comprises a rule to select one or more radio types at least based on a selection indicator.

12. The method of claim 11, further comprising:
receiving at least a portion of the set of rules from the core network (110).

13. The method of any one of claims 11 or 12, further comprising:
• converting the selection rules to a format that can be carried in access stratum signaling and transmitting the same with access stratum signaling; or
• transparently passing the selection rules and transmitting the same with non-access stratum signaling.

14. The method of any one of claims 11 to 13,
• wherein a first radio type of the plurality of radio types comprises a radio communication in accordance with Long Term Evolution; and/or
• wherein a second radio type of the plurality of radio types comprises a radio communication in accordance with 5G New Radio.

15. A method of processing data units, comprising:
• receiving one or more first data units from a radio access network node arrangement (104) in accordance with a first radio type and/or a second radio type, wherein each first data unit comprises a selection indicator;
• generating one or more second data units, wherein the one or more first data units and the one or more second data units belong to a same communication flow; and
• selecting, using the selection indicator and a stored set of one or more selection rules, for each second data unit of the one or more second data units, the radio type to transmit the one or more second data units to the radio access network node arrangement (104), wherein each selection rule comprises a rule to select one or more radio types at least based on a selection indicator,
• the method further comprising receiving at least a portion of the stored set of one or more selection rules from the radio access network node arrangement (104).
